# EUROPEAN PATENT APPLICATION

(11) **EP 2 213 362 A1**
(43) Date of publication of application: **04.08.2010**
(21) Application number: 08845878.1
(22) Date of filing: 31.10.2008
(51) Int. Cl.: B01D 53/26, A61L 9/16, F24F 3/14, F24F 11/02

(54) **HUMIDITY CONTROL DEVICE**

(30) Priority: 31.10.2007 JP 2007283558
(71) Applicant: Daikin Industries, Ltd., Osaka 530-8323 (JP)
(72) Inventor: MATSUI, Nobuki, Sakai-shi Osaka 591-8511 (JP)
(74) Representative: Wiedemann, Peter
(86) International application number: PCT/JP2008/003142
(87) International publication number: WO 2009/057322

(57) **Abstract**

A first adsorption heat exchanger (51) and a second adsorption heat exchanger (52) are provided in a refrigerant circuit (50) of a humidity control apparatus (10). In the refrigerant circuit (50), a refrigerant circulation direction can be reversed. In a purge operation of the humidity control apparatus (10), each of actions is performed, which are a purge action in which the first adsorption heat exchanger (51) serves as an evaporator, and a purge action in which the second adsorption heat exchanger (52) serves as the evaporator. During the purge operation, outdoor air is sent to the adsorption heat exchanger (51, 52) serving as the evaporator, and moisture in the outdoor air adsorbs to the adsorption heat exchanger (51, 52). A moisture content of the adsorption heat exchanger (51, 52) during the purge operation is greater than that during a normal operation, and odor material adsorbed to the adsorption heat exchanger (51, 52) is removed by moisture adsorbed to the adsorption heat exchanger (51, 52) during the purge operation.

## Description

### TECHNICAL FIELD

The present invention is relates to a humidity control apparatus for controlling air humidity by using adsorbent.

### BACKGROUND ART

Conventionally, humidity control apparatuses are known, which control air humidity by using adsorbent. Patent Document 1 discloses a humidity control apparatus including adsorption heat exchangers with adsorbent deposited on surfaces thereof.

The humidity control apparatus disclosed in Patent Document 1 includes a refrigerant circuit with two adsorption heat exchangers. The refrigerant circuit alternately performs an action in which the first adsorption heat exchanger serves as a condenser, and the second adsorption heat exchanger serves as an evaporator; and an action in which the second adsorption heat exchanger serves as the condenser, and the first adsorption heat exchanger serves as the evaporator. In the adsorption heat exchanger operating as the evaporator, moisture in air adsorbs to the adsorbent. In the adsorption heat exchanger operating as the condenser, moisture desorbs from the adsorbent to be imparted to air.

The humidity control apparatus disclosed in Patent Document 1 supplies a part of air passing through the adsorption heat exchangers to a room, and discharges the remaining air to outside. During a dehumidification operation, in the humidity control apparatus, air passing through one of the first and second adsorption heat exchangers, which operates as the evaporator, is supplied to the room; and air passing through the other adsorption heat exchanger which operates as the condenser is discharged to the outside. During a humidification operation, in the humidity control apparatus, air passing through one of the first and second adsorption heat exchangers, which operates as the evaporator, is discharged to the outside; and air passing through the other adsorption heat exchanger which operates as the condenser is supplied to the room.

### CITATION LIST

PATENT DOCUMENT
   PATENT DOCUMENT 1: Japanese Patent Publication No. 2006-078108

### SUMMARY OF THE INVENTION

### TECHNICAL PROBLEM

During an operation of the humidity control apparatus, not only moisture (water vapor) in air but also odor material such as ammonia adsorb to the adsorbent. During the operation of the humidity control apparatus, such odor material is accumulated in the adsorbent. Depending on an operating condition of the humidity control apparatus, the odor material may desorb from the adsorbent to be sent to the room together with the humidity-controlled air, thereby causing a loss of comfort in the room.

The present invention has been made in view of the foregoing, and it is an object of the present invention to remove the odor material from the adsorbent by the operation of the humidity control apparatus in the humidity control apparatus using the adsorbent.

### SOLUTION TO THE PROBLEM

A first aspect of the invention is intended for a humidity control apparatus including adsorption members (51, 52) with adsorbent, and controlling air humidity by exposing taken air to the adsorbent of the adsorption members (51, 52). Operations are selectively executed, which are normal operations in which air, humidity of which is controlled when passing through the adsorption member (51, 52), is supplied to a room; and a purge operation in which, in order to desorb odor material from the adsorption member (51, 52), moisture in taken air adsorbs to the adsorption member (51, 52) to obtain a moisture content of the adsorption member (51, 52) equal to or greater than a maximum value of a moisture content of the adsorption member (51, 52) during the normal operation.

In the first aspect of the invention, the normal operations and the purge operation are performed in the humidity control apparatus (10). During the normal operations, the humidity control apparatus (10) supplies taken air to the adsorption member (51, 52), and supplies air dehumidified or humidified by exposing to the adsorption member (51, 52) to the room. During the purge operation, the humidity control apparatus (10) supplies taken air to the adsorption member (51, 52), and moisture in air adsorbs to the adsorption member (51, 52).

In the first aspect of the invention, during the purge operation, the moisture content of the adsorption member (51, 52) (i.e., amount of H₂O adsorbed to the adsorption member (51, 52)) increases. As the moisture content of the adsorption member (51, 52) increases, odor material which has been adsorbed to the adsorbent is removed by water adsorbed to the adsorbent later, and then desorbs from the adsorbent. This reduces the amount of odor material adsorbed to the adsorption member (51, 52) when increasing the moisture content of the adsorption member (51, 52) by performing the purge operation.

In addition, during the purge operation of the first aspect of the invention, the moisture content of the adsorption member (51, 52) reaches the value equal to or greater than the moisture content of the adsorption member (51, 52) during the normal operation. Thus, during the normal operation subsequent to the purge operation, the moisture content of the adsorption member (51, 52) does not exceed the value during the purge operation, thereby reducing desorption of odor material from the adsorption member (51, 52).

A second aspect of the invention is intended for the humidity control apparatus of the first aspect of the invention, in which adsorption heat exchangers (51, 52) with adsorbent deposited on surfaces thereof are provided as the adsorption members; the adsorption heat exchangers (51, 52) are connected to each other to form a heat-transfer medium circuit (50) in which heat-transfer medium circulates; and the heat-transfer medium circuit (50) performs an action in which heat-transfer medium for cooling is supplied to the adsorption heat exchanger (51, 52) in order to adsorb moisture in air to the adsorption heat exchanger (51, 52), and an action in which heat-transfer medium for heating is supplied to the adsorption heat exchanger (51, 52) in order to desorb moisture from the adsorption heat exchanger (51, 52),

In the second aspect of the invention, the adsorption heat exchangers (51, 52) are provided as the adsorption members in the humidity control apparatus (10). In the adsorption heat exchanger (51, 52) to which the heat-transfer medium for cooling is supplied, moisture in air adsorbs to the adsorbent deposited on the surface thereof, and adsorption heat generated thereupon is absorbed by the heat-transfer medium for cooling. On the other hand, in the adsorption heat exchanger (51, 52) to which the heat-transfer medium for heating is supplied, the adsorbent deposited on the surface thereof is heated by the heat-trasfer medium for heating, and moisture desorbed from the heated adsorbent is imparted to air passing through the adsorption heat exchanger (51, 52).

A third aspect of the invention is intended for the humidity control apparatus of the second aspect of the invention, in which a refrigerant circuit (50) performing a refrigeration cycle by circulating refrigerant is provided as the heat-transfer medium circuit; and, during the purge operation, in the refrigerant circuit (50), refrigerant circulates so that the adsorption heat exchanger (51, 52) to which moisture in air adsorbs serves as an evaporator, and a capacity of a compressor (53) is controlled so that a refrigerant evaporation temperature in the adsorption heat exchanger (51, 52) is equal to a dew-point temperature of air passing through the adsorption heat exchanger (51, 52).

In the third aspect of the invention, the refrigerant circuit (50) is provided as the heat-transfer medium circuit in the humidity control apparatus (10). In the refrigerant circuit (50), high-pressure refrigerant is supplied to the adsorption heat exchanger (51, 52) as the heat-transfer medium for heating, and low-pressure refrigerant is supplied to the adsorption heat exchanger (51, 52) as the heat-transfer medium for cooling. In the adsorption heat exchanger (51, 52) to which moisture in air adsorbs during the purge operation, the supplied low-pressure refrigerant absorbs the adsorption heat to be evaporated.

In the third aspect of the invention, during the purge operation, the capacity of the compressor (53) is controlled in the refrigerant circuit (50) so that the refrigerant evaporation temperature in the adsorption heat exchanger (51, 52) operating as the evaporator is equal to the dew-point temperature of air passing through the adsorption heat exchanger (51, 52). The surface temperature of the adsorption heat exchanger (51, 52) rises to some extent as compared to the refrigerant evaporation temperature in the adsorption heat exchanger (51, 52). That is, the surface temperature of the adsorption heat exchanger (51, 52) is slightly higher than the dew-point temperature of air passing through the adsorption heat exchanger (51, 52). This does not cause condensation of moisture in air on the surface of the adsorption heat exchanger (51, 52) serving as the evaporator during the purge operation.

A fourth aspect of the invention is intended for the humidity control apparatus of the third aspect of the invention, in which, during the purge operation, in the refrigerant circuit (50), a degree of opening of an expansion valve (55) is controlled so that a degree of superheat of refrigerant at an outlet of the adsorption heat exchanger (51, 52) serving as the evaporator is constant.

In the fourth aspect of the invention, the degree of opening of the expansion valve (55) during the purge operation is controlled so that the degree of superheat of refrigerant flowing out from the adsorption heat exchanger (51, 52) serving as the evaporator is constant.

A fifth aspect of the invention is intended for the humidity control apparatus of the second aspect of the invention, in which a refrigerant circuit (50) performing a refrigeration cycle by circulating refrigerant is provided as the heat-transfer medium circuit; the refrigerant circuit (50) includes a first adsorption heat exchanger (51) and a second adsorption heat exchanger (52) as adsorption members, and is switchable between a state in which the first adsorption heat exchanger (51) serves as a heat radiator, and the second adsorption heat exchanger (52) serves as the evaporator; and a state in which the second adsorption heat exchanger (52) serves as the heat radiator, and the first adsorption heat exchanger (51) serves as the evaporator; during the normal operation, actions are alternately repeated, which are a first normal action in which second air is supplied to the first adsorption heat exchanger (51) serving as the heat radiator, and first air is supplied to the second adsorption heat exchanger (52) serving as the evaporator, and a second normal action in which second air is supplied to the second adsorption heat exchanger (52) serving as the heat radiator, and first air is supplied to the first adsorption heat exchanger (51) serving as the evaporator; and one of the first dehumidified air and the second humidified air is supplied to the room, and the other is discharged to outside; and during the purge operation, each of actions is performed, which are a first purge action in which outdoor air is supplied to the first adsorption heat exchanger (51) serving as the heat radiator, and to the second adsorption heat exchanger (52) serving as the evaporator, and a second purge action in which outdoor air is supplied to the second adsorption heat exchanger (52) serving as the heat radiator, and to the first adsorption heat exchanger (51) serving as the evaporator; and the outdoor air passing through the first adsorption heat exchanger (51) and the second adsorption heat exchanger (52) is discharged to the outside.

In the fifth aspect of the invention, the first adsorption heat exchanger (51) and the second adsorption heat exchanger (52) are connected to each other as the adsorption members in the refrigerant circuit (50). The refrigerant circuit (50) performs the refrigeration cycle by circulating refrigerant. At this point, in the refrigerant circuit (50), refrigerant releases heat in one of the first adsorption heat exchanger (51) and the second adsorption heat exchanger (52), refrigerant absorbs heat in the other.

In the fifth aspect of the invention, during the normal operation, the humidity control apparatus (10) alternately repeats the first and second normal actions. That is, in the normal operation, each of the first adsorption heat exchanger (51) and the second adsorption heat exchanger (52) alternately performs the action for adsorbing moisture in the first air, and the action for imparting desorbed moisture to the second air.

In addition, in the fifth aspect of the invention, during the purge operation, the humidity control apparatus (10) performs each of the first and second purge actions. In the first purge action, moisture in outdoor air adsorbs to the second adsorption heat exchanger (52) serving as the evaporator to remove odor material from the second adsorption heat exchanger (52), and refrigerant releases heat to outdoor air in the first adsorption heat exchanger (51). On the other hand, in the second purge action, moisture in outdoor air adsorbs to the first adsorption heat exchanger (51) serving as the evaporator to remove odor material from the first adsorption heat exchanger (51), and refrigerant releases heat to outdoor air in the second adsorption heat exchanger (52). During the purge operation, outdoor air passing through the first adsorption heat exchanger (51) and the second adsorption heat exchanger (52) is discharged to the outside.

A sixth aspect of the invention is intended for the humidity control apparatus of the fifth aspect of the invention, in which the first and second normal actions are alternately performed at predetermined time intervals during the normal operation; the first and second purge actions are performed for a predetermined period of time during the purge operation; and a duration time of each purge action during the purge operation is longer than a duration time of each normal action during the normal operation.

In the sixth aspect of the invention, each of the purge actions of the purge operation is performed for a longer period of time than each normal action of the normal operation. That is, during the purge operation, moisture in outdoor air continuously adsorbs to the adsorption heat exchanger (51, 52) for a longer period of time as compared to the normal operation.

A seventh aspect of the invention is intended for the humidity control apparatus of the first aspect of the invention, in which a duration time of the purge operation is controlled so as to increase as an absolute humidity of air supplied to the adsorption member (51, 52) during the purge operation becomes lower.

In the seventh aspect of the invention, the duration time of the purge operation is controlled depending on the absolute humidity of air passing through the adsorption member (51, 52). When decreasing the absolute humidity of air supplied to the adsorption member (51, 52), moisture in air poorly adsorbs to the adsorption member (51, 52). Thus, time required for sufficiently increasing the moisture content of the adsorption member (51, 52) becomes longer, thereby extending the duration time of the purge operation. Conversely, when increasing the absolute humidity of air supplied to the adsorption member (51, 52), moisture in air easily adsorbs to the adsorption member (51, 52). Thus, the time required for sufficiently increasing the moisture content of the adsorption member (51, 52) becomes shorter, thereby shortening the duration time of the purge operation.

A eighth aspect of the invention is intended for the humidity control apparatus of the first aspect of the invention, in which the purge operation is performed every time a summation of time for which the normal operations are performed reaches a predetermined reference value.

In the eighth aspect of the invention, the purge operation is performed every time the normal operation is performed for a predetermined period of time, and odor material accumulated in the adsorption member (51, 52) during the normal operation is removed from the adsorption member (51, 52).

### ADVANTAGES OF THE INVENTION

According to the present invention, the humidity control apparatus (10) performs the purge operation to increase the moisture content of the adsorption member (51, 52), thereby desorbing odor material from the adsorption member (51, 52). The amount of odor material adsorbed to the adsorption member (51, 52) can be reduced by the operation of the humidity control apparatus (10) itself without a maintenance person going and working at an installation site of the humidity control apparatus (10). This prevents odor material desorbed from the adsorption members (51, 52) from being supplied to the room together with humidity-controlled air during the normal operations, thereby ensuring improvement of comfort in the room.

During the purge operation of the present embodiment, the moisture content of the adsorption member (51, 52) reaches the value equal to or greater than the moisture content of the adsorption member (51, 52) during the normal operation. That is, during the normal operation subsequent to the purge operation, the moisture content of the adsorption member (51, 52) does not exceed the value during the purge operation. This ensures reduction of desorption of odor material from the adsorption members (51, 52) during the normal operations, thereby, also in this regard, ensuring the comfort in the room.

In the third aspect of the invention, the capacity of the compressor (53) of the refrigerant circuit (50) is controlled so that the refrigerant evaporation temperature in the adsorption heat exchanger (51, 52) operating as the evaporator during the purge operation is equal to the dew-point temperature of air passing through such an adsorption heat exchanger (51, 52). This reduces the surface temperature of the adsorption heat exchanger (51, 52) as much as possible within a range in which dew condensation is not caused on the surface of the adsorption heat exchanger (51, 52) serving as the evaporator, during the purge operation. Consequently, it is unnecessary to dispose drain water due to the dew condensation on the adsorption heat exchanger (51, 52), and the amount of moisture adsorbed to the adsorption heat exchanger (51, 52) during the purge operation can be maximized.

In the fifth aspect of the invention, during the purge operation, the humidity control apparatus (10) supplies outdoor air to the first adsorption heat exchanger (51) and the second adsorption heat exchanger (52), and discharges the outdoor air passing through the adsorption heat exchangers (51, 52) to the outside. That is, the humidity control apparatus (10) performs the purge operation without sucking air from the room, and blowing off air to the room. Thus, according to the present invention, the purge operation can be performed without effects on the room environment.

In the sixth aspect of the invention, the time for which moisture in air adsorbs to the adsorption heat exchanger (51, 52) during the purge operation is longer than the time for which moisture in air adsorbs to the adsorption heat exchanger (51, 52) during the normal operation. Thus, according to the present invention, this ensures the moisture content of the adsorption heat exchanger (51, 52) during the purge operation, which is greater than the moisture content of the adsorption heat exchanger (51, 52) during the normal operation, thereby ensuring removal of odor material from the adsorption heat exchanger (51, 52) by the purge operation.

In the seventh aspect of the invention, the duration time of the purge operation is controlled depending on the absolute humidity of air from which moisture is imparted to the adsorption member (51, 52) during the purge operation. This ensures an increase in the moisture content of the adsorption member (51, 52) in spite of the air state during the purge operation, thereby ensuring the removal of odor material from the adsorption member (51, 52).

### BRIEF DESCRIPTION OF THE DRAWINGS

[FIG. 1] FIG. 1 is a perspective view of a humidity control apparatus as viewed from a frontal side, which is illustrated without a top plate of a casing.
[FIG. 2] FIG. 2 is a perspective view of the humidity control apparatus as viewed from the frontal side, which is illustrated without a part of the casing and an electrical component box.
[FIG. 3] FIG. 3 is a plan view of the humidity control apparatus, which is illustrated without the top plate of the casing.
[FIG. 4] FIGS. 4 are schematic plan, right side, and left side views which are illustrated without a part of the humidity control apparatus.
[FIG. 5] FIGS. 5 are plumbing diagrams illustrating a structure of a refrigerant circuit. FIG. 5(A) illustrates a first normal action and a first purge action. FIG. 5(B) illustrates a second normal action and a second purge action.
[FIG. 6] FIGS. 6 are schematic plan, right side, and left side views of the humidity control apparatus, which illustrate an air flow in a first normal action of a dehumidification/ventilation operation.
[FIG. 7] FIGS. 7 are schematic plan, right side, and left side views of the humidity control apparatus, which illustrate an air flow in a second normal action of the dehumidification/ventilation operation.
[FIG. 8] FIGS. 8 are schematic plan, right side, and left side views of the humidity control apparatus, which illustrate an air flow in a first normal action of a humidification/ventilation operation.
[FIG. 9] FIGS. 9 are schematic plan, right side, and left side views of the humidity control apparatus, which illustrate an air flow in a second normal action of the humidification/ventilation operation.
[FIG. 10] FIGS. 10 are schematic plan, right side, and left side views of the humidity control apparatus, which illustrate an air flow in a simple ventilation operation.
[FIG. 11] FIGS. 11 are schematic plan, right side, and left side views of the humidity control apparatus, which illustrate an air flow in a purge operation.
[FIG. 12] FIGS. 12 are schematic plan, right side, and left side views of the humidity control apparatus, which illustrate an air flow in the purge operation.
[FIG. 13] FIG. 13 is a flow chart of a control operation of a controller in the purge operation.

### DESCRIPTION OF REFERENCE CHARACTERS

- 10: Humidity control apparatus
- 50: Refrigerant Circuit (Heat-Transfer Medium Circuit)
- 51: First Adsorption Heat Exchanger (Adsorption Member)
- 52: Second Adsorption Heat Exchanger (Adsorption Member)
- 60: Controller

### DESCRIPTION OF EMBODIMENTS

An embodiment of the present invention will be described in detail hereinafter with reference to the drawings. A humidity control apparatus (10) of the present embodiment is for controlling humidity in a room, and ventilating the room. The humidity control apparatus (10) controls the humidity of taken outdoor air (OA) to supply such air to the room, and, at the same time, discharges taken room air (RA) to outside.

### <Entire Structure of Humidity control apparatus>

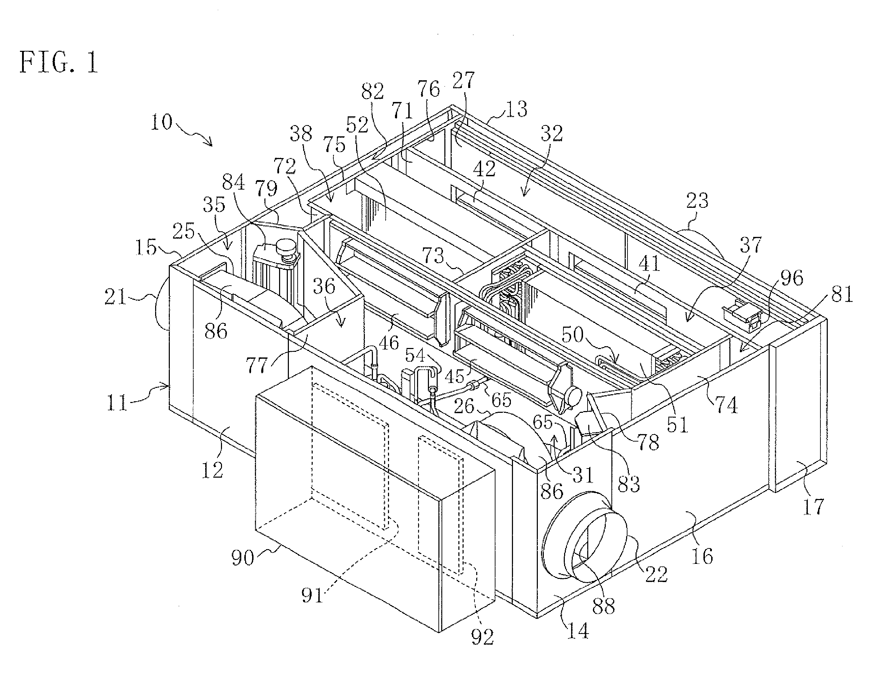

The humidity control apparatus (10) will be described with reference to FIGS. 1-4 as necessary. Unless otherwise specified, terms "upper," "lower," "left," "right," "front," "rear," "near," and "back" used herein designate directions when the humidity control apparatus (10) is viewed from a frontal side.

The humidity control apparatus (10) includes a casing (11). A refrigerant circuit (50) is accommodated in the casing (11). In the refrigerant circuit (50), a first adsorption heat exchanger (51), a second adsorption heat exchanger (52), a compressor (53), a four-way switching valve (54), and an electric-operated expansion valve (55) are connected to each other. The refrigerant circuit (50) will be described in detail later.

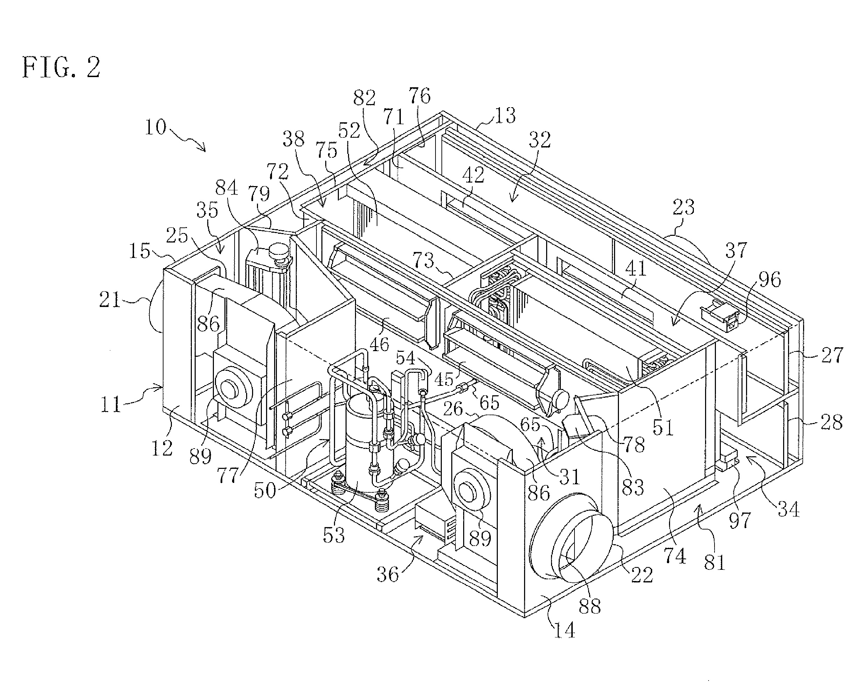

The casing (11) is formed in an approximately-flat rectangular-parallelepiped shape with a relatively-low height. In the casing (11) illustrated in FIG. 2, a side surface on a near-left side (i.e., frontal surface) serves as a frontal panel section (12); a side surface on a back-right side (i.e., dorsal surface) serves as a dorsal panel section (13); a side surface on a near-right side serves as a first side panel section (14); and a side surface on a back-left side serves as a second side panel section (15).

The casing (11) includes an outdoor air suction port (24); a room air suction port (23); an air supply port (22); and an air discharge port (21). The outdoor air suction port (24) and the room air suction port (23) open in the dorsal panel section (13). The outdoor air suction port (24) is arranged in a lower portion of the dorsal panel section (13). The room air suction port (23) is arranged in an upper portion of the dorsal panel section (13). The air supply port (22) is arranged close to an end portion of the first side panel section (14) on the frontal panel section (12) side. The air discharge port (21) is arranged close to an end portion of the second side panel section (15) on the frontal panel section (12) side.

An inner space of the casing (11) includes an upstream partition plate (71); a downstream partition plate (72); a central partition plate (73); a first partition plate (74); and a second partition plate (75). The partition plates (71-75) are vertically arranged on a bottom plate of the casing (11), and extend from the bottom plate to an top plate of the casing (11) to divide the inner space of the casing (11).

The upstream partition plate (71) and the downstream partition plate (72) are arranged at predetermined intervals in a front-rear direction of the casing (11) so as to be parallel to the frontal panel section (12) and the dorsal panel section (13). The upstream partition plate (71) is arranged closer to the dorsal panel section (13). The downstream partition plate (72) is arranged closer to the frontal panel section (12).

The first partition plate (74) and the second partition plate (75) are arranged so as to be parallel to the first side panel section (14) and the second side panel section (15). The first partition plate (74) is arranged at a predetermined interval from the first side panel section (14) so as to close a space between the upstream partition plate (71) and the downstream partition plate (72) from the right side. The second partition plate (75) is arranged at a predetermined interval from the second side panel section (15) so as to close the space between the upstream partition plate (71) and the downstream partition plate (72) from the left side.

The central partition plate (73) is arranged between the upstream partition plate (71) and the downstream partition plate (72) so as to be perpendicular to the upstream partition plate (71) and the downstream partition plate (72). The central partition plate (73) is provided so as to extend from the upstream partition plate (71) to the downstream partition plate (72), and divides the space between the upstream partition plate (71) and the downstream partition plate (72) into right and left spaces.

In the casing (11), a space between the upstream partition plate (71) and the dorsal panel section (13) is divided into two upper and lower spaces. The upper space defines a room air path (32), and the lower space defines an outdoor air path (34). The room air path (32) communicates with the room through a duct connected to the room air suction port (23). In the room air path (32), a room air filter (27), a room air humidity sensor (96), and a room air temperature sensor are installed. The outdoor air path (34) communicates with an outdoor space through a duct connected to the outdoor air suction port (24). In the outdoor air path (34), an outdoor air filter (28), an outdoor air humidity sensor (97), and an outdoor air temperature sensor are installed. The room air humidity sensor (96) and the outdoor air humidity sensor (97) measure air relative humidity. The room air temperature sensor and the outdoor air temperature sensor are omitted in the figures.

The space between the upstream partition plate (71) and the downstream partition plate (72) in the casing (11) is divided into the right and left spaces by the central partition plate (73). The right space with respect to the central partition plate (73) serves as a first heat exchange chamber (37), and the left space with respect to the central partition plate (73) serves as a second heat exchange chamber (38). The first adsorption heat exchanger (51) is accommodated in the first heat exchange chamber (37). The second adsorption heat exchanger (52) is accommodated in the second heat exchange chamber (38). Although not illustrated in the figure, the electric-operated expansion valve (55) of the refrigerant circuit (50) is accommodated in the first heat exchange chamber (37).

The adsorption heat exchangers (51, 52) serve as adsorption members for exposing the adsorbent to air. Each of the adsorption heat exchangers (51, 52) is a so-called "cross-fin-type fin-and-tube heat exchanger" with adsorbent deposited on a surface thereof, and is formed in a thick rectangular plate-like shape or a flat rectangular-parallelepiped shape as a whole. The adsorption heat exchangers (51, 52) are vertically arranged in the heat exchange chambers (37, 38) so that frontal and dorsal surfaces thereof are parallel to the upstream partition plate (71) and the downstream partition plate (72). As the adsorbent deposited on the adsorption heat exchangers (51, 52), e.g., zeolite, silica gel, etc., or a mixture thereof is used.

In the inner space of the casing (11), a space along a frontal surface of the downstream partition plate (72) is divided into upper and lower spaces. The upper portion of the horizontally-divided spaces defines an air supply path (31), and the lower portion defines an air discharge path (33).

Four openable dampers (41-44) are provided in the upstream partition plate (71). Each of the dampers (41-44) is formed in an approximately horizontally-elongated rectangular shape. Specifically, in a portion (upper portion) of the upstream partition plate (71), which faces the room air path (32), a first room air damper (41) is attached on the right side with respect to the central partition plate (73), and a second room air damper (42) is attached on the left side with respect to the central partition plate (73). In a portion (lower portion) of the upstream partition plate (71), which faces the outdoor air path (34), a first outdoor air damper (43) is attached on the right side with respect to the central partition plate (73), and a second outdoor air damper (44) is attached on the left side with respect to the central partition plate (73).

Four openable dampers (45-48) are provided in the downstream partition plate (72). Each of the dampers (45-48) is formed in an approximately horizontally-elongated rectangular shape. Specifically, in a portion (upper portion) of the downstream partition plate (72), which faces the air supply path (31), a first air supply damper (45) is attached on the right side with respect to the central partition plate (73), and a second air supply damper (46) is attached on the left side with respect to the central partition plate (73). In a portion (lower portion) of the downstream partition plate (72), which faces the air discharge path (33), a first air discharge damper (47) is attached on the right side with respect to the central partition plate (73), and a second air discharge damper (48) is attached on the left side with respect to the central partition plate (73).

In the casing (11), a space between the air supply path (31) and the air discharge path (33), and the frontal panel section (12) is divided into right and left spaces by a partition plate (77). The right space with respect to the partition plate (77) defines an air supply fan chamber (36), and the left space with respect to the partition plate (77) defines an air discharge fan chamber (35).

An air supply fan (26) is accommodated in the air supply fan chamber (36). An air discharge fan (25) is accommodated in the air discharge fan chamber (35). The air supply fan (26) and the air discharge fan (25) are centrifugal multi-blade fans (so-called "sirocco" fans).

Specifically, such fans (25, 26) includes fan rotors; fan casings (86); and fan motors (89). Although not illustrated in the figures, the fan rotor is formed in a cylindrical shape, the length of which in an axial direction is shorter than its diameter, and many impellers are formed in a circumferential surface of the fan rotor. The fan rotor is accommodated in the fan casing (86). An intake port (87) opens at one of side surfaces (side surfaces perpendicular to the axial direction of the fan rotor) of the fan casing (86). In addition, a portion outwardly protruding from a circumferential surface of the fan casing (86) is formed in the fan casing (86), and a blow-off port (88) opens at an end portion of the protrusion. The fan motor (89) is attached to a surface on a side of the fan casing (86), which is opposite to the intake port (87) side. The fan motor (89) is connected to the fan rotor to rotatably drive the fan rotor.

When rotatably driving the fan rotors by the fan motors (89) in the air supply fan (26) and the air discharge fan (25), air is sucked into the fan casings (86) through the intake ports (87), and air in the fan casings (86) is blown off through the blow-off ports (88).

In the air supply fan chamber (36), the air supply fan (26) is installed so that the intake port (87) of the fan casing (86) faces the downstream partition plate (72). In addition, the blow-off port (88) of the fan casing (86) of the air supply fan (26) is attached to the first side panel section (14) so as to communicate with the air supply port (22).

In the air discharge fan chamber (35), the air discharge fan (25) is installed so that the intake port (87) of the fan casing (86) faces the downstream partition plate (72). In addition, the blow-off port (88) of the fan casing (86) of the air discharge fan (25) is attached to the second side panel section (15) so as to communicate with the air discharge port (21).

The compressor (53) and the four-way switching valve (54) of the refrigerant circuit (50) are accommodated in the air supply fan chamber (36). The compressor (53) and the four-way switching valve (54) are arranged between the air supply fan (26) and the partition plate (77) in the air supply fan chamber (36).

In the casing (11), a space between the first partition plate (74) and the first side panel section (14) defines a first bypass path (81). A start point of the first bypass path (81) communicates only with the outdoor air path (34), and is isolated from the room air path (32). A terminal point of the first bypass path (81) is separated from the air supply path (31), the air discharge path (33), and the air supply fan chamber (36) by a partition plate (78). A portion of the partition plate (78), which faces the air supply fan chamber (36), is provided with a first bypass damper (83).

In the casing (11), a space between the second partition plate (75) and the second side panel section (15) defines a second bypass path (82). A start point of the second bypass path (82) communicates only with the room air path (32), and is isolated from the outdoor air path (34). A terminal point of the second bypass path (82) is separated from the air supply path (31), the air discharge path (33), and the air discharge fan chamber (35) by a partition plate (79). A portion of the partition plate (79), which faces the air discharge fan chamber (35), is provided with a second bypass damper (84).

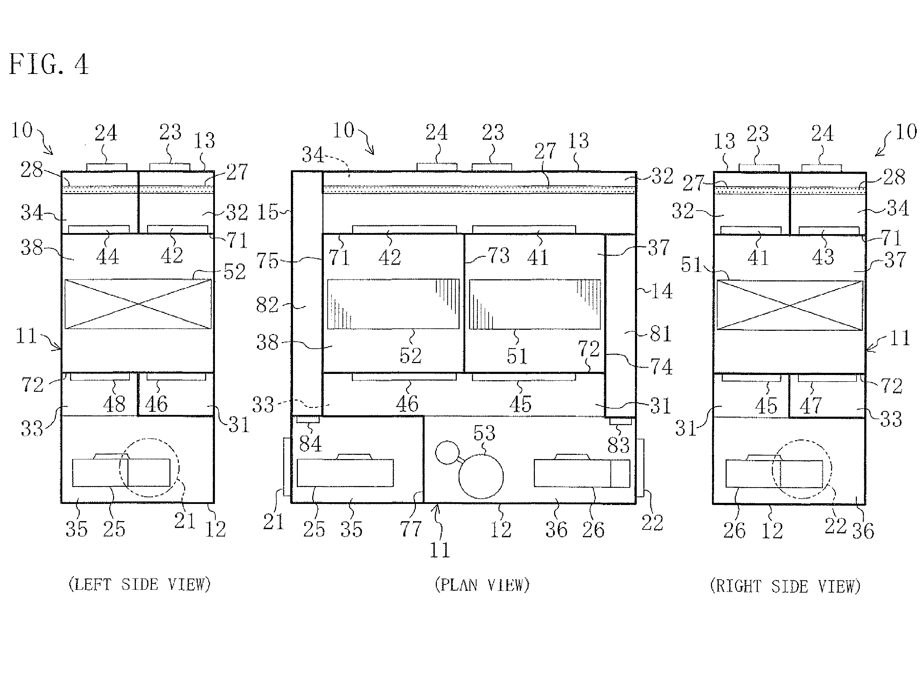

The right and left side views of FIGS. 4 are illustrated without the first bypass path (81), the second bypass path (82), the first bypass damper (83), and the second bypass damper (84).

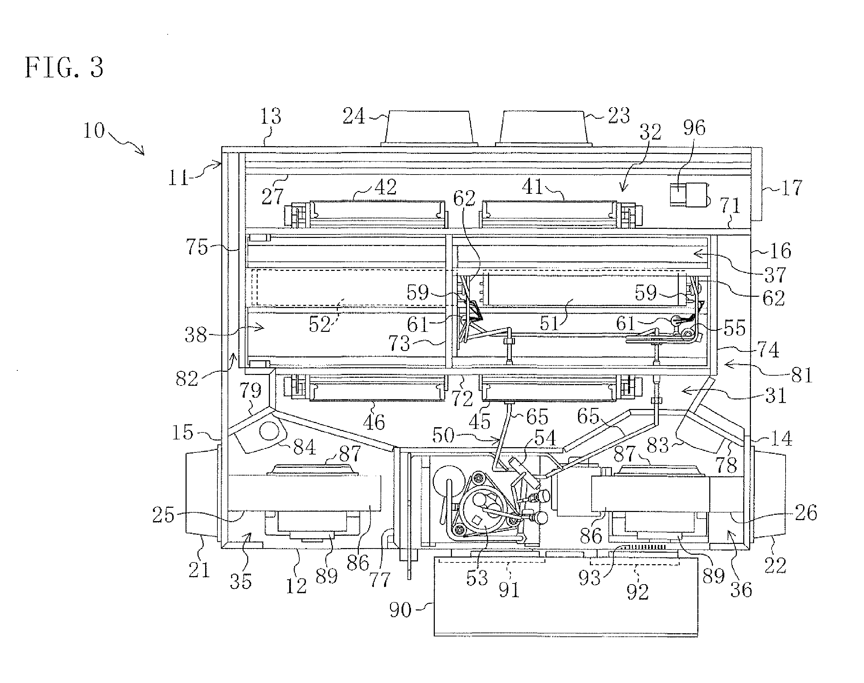

In the frontal panel section (12) of the casing (11), an electrical component box (90) is attached to a portion closer to the right of the frontal panel section (12). In FIGS. 2 and 4, the electrical component box (90) is omitted. The electrical component box (90) is a rectangular-parallelepiped box, and a control substrate (91) and a power-source substrate (92) are accommodated therein. The control substrate (91) and the power-source substrate (92) are attached to an inner surface in a portion of a side plate of the electrical component box (90), which is adjacent to the frontal panel section (12). Heat-release fins (93) are provided in an inverter section of the power-source substrate (92). The heat-release fins (93) are provided so as to protrude from a dorsal surface of the power-source substrate (92), and are exposed to the air supply fan chamber (36) with the heat-release fins (93) penetrating through a dorsal plate of the electrical component box (90) and the frontal panel section (12) of the casing (11) (see FIG. 3).

### <Structure of Refrigerant Circuit>

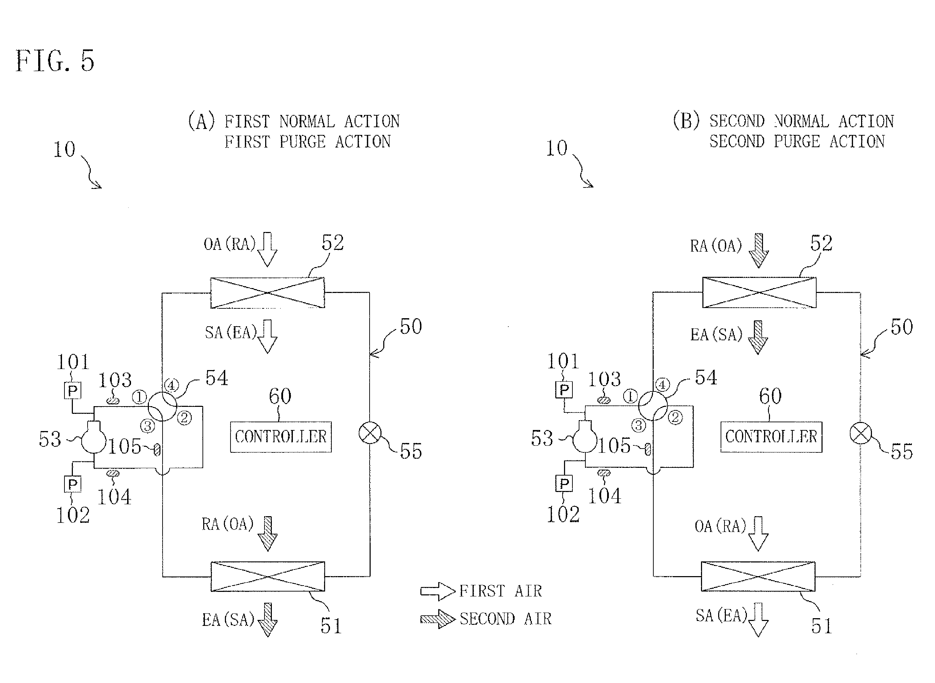

As illustrated in FIGS. 5, the refrigerant circuit (50) is a closed circuit including the first adsorption heat exchanger (51); the second adsorption heat exchanger (52); the compressor (53); the four-way switching valve (54); and the electric-operated expansion valve (55). In the refrigerant circuit (50), filled refrigerant circulates to perform a vapor compression refrigeration cycle.

In the refrigerant circuit (50), a discharge side of the compressor (53) is connected to a first port of the four-way switching valve (54), and a suction side thereof is connected to a second port of the four-way switching valve (54). In addition, in the refrigerant circuit (50), the first adsorption heat exchanger (51), the electric-operated expansion valve (55), and the second adsorption heat exchanger (52) are sequentially connected to each other from a third port toward a fourth port of the four-way switching valve (54).

The four-way switching valve (54) can be switched between a first state (state illustrated in FIG. 5(A)) in which the first port communicates with the third port with the second port communicating with the fourth port, and a second state (state illustrated in FIG. 5(B)) in which the first port communicates with the fourth port with the second port communicating with the third port.

The compressor (53) is a hermetic compressor in which a compression mechanism for compressing refrigerant and an electric motor for driving the compression mechanism are accommodated in a single casing. When changing an alternating frequency to be supplied to the electric motor of the compressor (53) (i.e., operating frequency of the compressor (53)), the rotational speed of the compression mechanism driven by the electric motor is changed, thereby changing the amount of refrigerant discharged from the compressor (53) per unit time. That is, the compressor (53) has the variable volume.

In the refrigerant circuit (50), a high-pressure sensor (101) and a discharge pipe temperature sensor (103) are attached to a pipe connecting between the discharge side of the compressor (53) and the first port of the four-way switching valve (54). The high-pressure sensor (101) measures the pressure of refrigerant discharged from the compressor (53). The discharge pipe temperature sensor (103) measures the temperature of refrigerant discharged from the compressor (53).

In addition, in the refrigerant circuit (50), a low-pressure sensor (102) and a suction pipe temperature sensor (104) are attached to a pipe connecting between the suction side of the compressor (53) and the second port of the four-way switching valve (54). The low-pressure sensor (102) measures the pressure of refrigerant sucked into the compressor (53). The suction pipe temperature sensor (104) measures the temperature of refrigerant sucked into the compressor (53).

Further, in the refrigerant circuit (50), a pipe temperature sensor (105) is attached to a pipe connecting between the third port of the four-way switching valve (54) and the first adsorption heat exchanger (51). The pipe temperature sensor (105) is arranged close to the four-way switching valve (54) in such a pipe, and measures the temperature of refrigerant flowing through the pipe.

### <Structure of Controller>

A controller (60) is provided as a control means in the humidity control apparatus (10). In the humidity control apparatus (10) of the present embodiment, a microcomputer provided in the control substrate (91) serves as the controller (60).

Measured values of the room air humidity sensor (96), the room air temperature sensor, the outdoor air humidity sensor (97), and the outdoor air temperature sensor are inputted to the controller (60). In addition, measured values of the sensors (91, 92, ... ) provided in the refrigerant circuit (50) are inputted to the controller (60). The controller (60) controls an operation of the humidity control apparatus (10) based on such inputted measured values.

In the humidity control apparatus (10), a dehumidification/ventilation operation, a humidification/ventilation operation, a simple ventilation operation, and a purge operation which will be described later are switched by a control operation of the controller (60). In addition, the controller (60) controls actions of the dampers (41-48), the fans (25, 26), the compressor (53), the electric-operated expansion valve (55), and the four-way switching valve (54) during such operations.

### Operation

The humidity control apparatus (10) of the present embodiment selectively performs the dehumidification/ventilation operation, the humidification/ventilation operation, the simple ventilation operation, and the purge operation. The humidity control apparatus (10) performs the dehumidification/ventilation operation and the humidification/ventilation operation as normal operations.

### <Dehumidification/Ventilation Operation>

In the dehumidification/ventilation operation, the humidity control apparatus (10) alternately repeats first and second normal actions which will be described later, at predetermined time intervals (e.g., 3-4 minute intervals). During the dehumidification/ventilation operation, the first bypass damper (83) and the second bypass damper (84) are kept closed.

In the dehumidification/ventilation operation, the humidity control apparatus (10) takes outdoor air into the casing (11) through the outdoor air suction port (24) as first air, and takes room air into the casing (11) through the room air suction port (23) as second air.

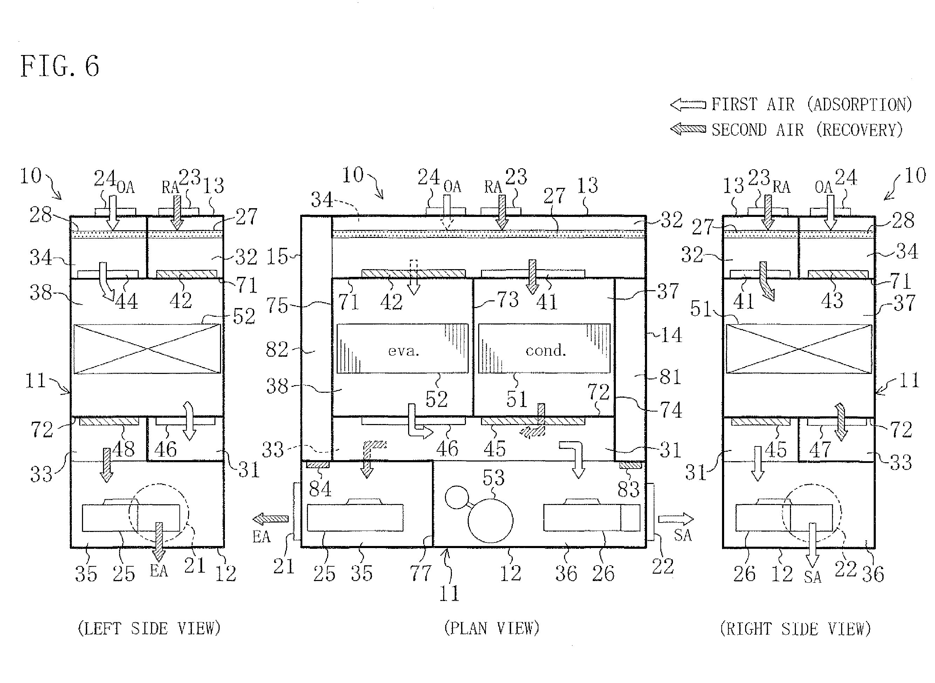

First, the first normal action of the dehumidification/ventilation operation will be described. As illustrated in FIGS. 6, during the first normal action, the first room air damper (41), the second outdoor air damper (44), the second air supply damper (46), and the first air discharge damper (47) are opened; and the second room air damper (42), the first outdoor air damper (43), the first air supply damper (45), and the second air discharge damper (48) are closed. During the first normal action, the four-way switching valve (54) is set to the first state (state illustrated in FIG. 5(A)) in the refrigerant circuit (50). The first adsorption heat exchanger (51) serves as a condenser, and the second adsorption heat exchanger (52) serves as an evaporator.

The first air flows into the outdoor air path (34) to pass through the outdoor air filter (28), and then flows into the second heat exchange chamber (38) through the second outdoor air damper (44). Subsequently, the first air passes through the second adsorption heat exchanger (52). In the second adsorption heat exchanger (52), moisture in the first air adsorbs to the adsorbent, and then adsorption heat generated thereupon is absorbed by refrigerant. The first air dehumidified in the second adsorption heat exchanger (52) flows into the air supply path (31) through the second air supply damper (46). After the first air passes through the air supply fan chamber (36), the first air is supplied to the room through the air supply port (22).

On the other hand, the second air flows into the room air path (32) to pass through the room air filter (27), and then flows into the first heat exchange chamber (37) through the first room air damper (41). Subsequently, the second air passes through the first adsorption heat exchanger (51). In the first adsorption heat exchanger (51), moisture desorbs from the adsorbent heated by refrigerant, and then the desorbed moisture is imparted to the second air. The second air to which moisture is imparted in the first adsorption heat exchanger (51) flows into the air discharge path (33) through the first air discharge damper (47). After the second air passes through the air discharge fan chamber (35), the second air is discharged to the outside through the air discharge port (21).

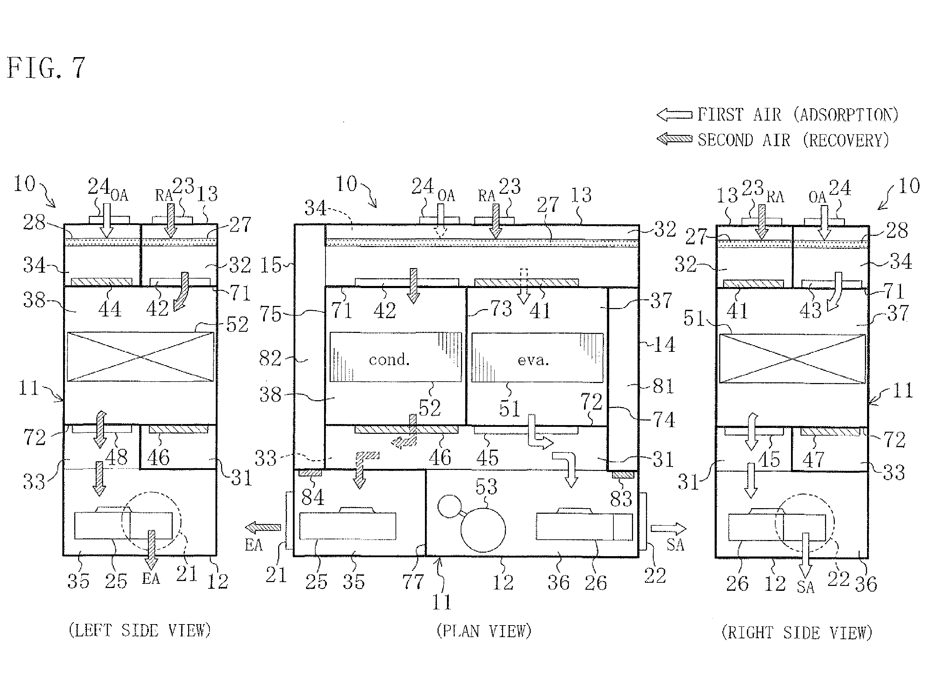

Next, the second normal action of the dehumidification/ventilation operation will be described. As illustrated in FIGS. 7, during the second normal action, the second room air damper (42), the first outdoor air damper (43), the first air supply damper (45), and the second air discharge damper (48) are opened; and the first room air damper (41), the second outdoor air damper (44), the second air supply damper (46), and the first air discharge damper (47) are closed. During the second normal action, the four-way switching valve (54) is set to the second state (state illustrated in FIG. 5(B)) in the refrigerant circuit (50). The first adsorption heat exchanger (51) serves as the evaporator, and the second adsorption heat exchanger (52) serves as the condenser.

The first air flows into the outdoor air path (34) to pass through the outdoor air filter (28), and then flows into the first heat exchange chamber (37) through the first outdoor air damper (43). Subsequently, the first air passes through the first adsorption heat exchanger (51). In the first adsorption heat exchanger (51), moisture in the first air adsorbs to the adsorbent, and then adsorption heat generated thereupon is absorbed by refrigerant. The first air dehumidified in the first adsorption heat exchanger (51) flows into the air supply path (31) through the first air supply damper (45). After the first air passes through the air supply fan chamber (36), the first air is supplied to the room through the air supply port (22).

On the other hand, the second air flows into the room air path (32) to pass through the room air filter (27), and then flows into the second heat exchange chamber (38) through the second room air damper (42). Subsequently, the second air passes through the second adsorption heat exchanger (52). In the second adsorption heat exchanger (52), moisture desorbs from the adsorbent heated by refrigerant, and then the desorbed moisture is imparted to the second air. The second air to which moisture is imparted in the second adsorption heat exchanger (52) flows into the air discharge path (33) through the second air discharge damper (48). After the second air passes through the air discharge fan chamber (35), the second air is discharged to the outside through the air discharge port (21).

### <Humidification/Ventilation Operation>

In the humidification/ventilation operation, the humidity control apparatus (10) alternately repeats first and second normal actions which will be described later, at predetermined time intervals (e.g., 3-4 minute intervals). During the humidification/ventilation operation, the first bypass damper (83) and the second bypass damper (84) are kept closed.

In the humidification/ventilation operation, the humidity control apparatus (10) takes outdoor air into the casing (11) through the outdoor air suction port (24) as second air, and takes room air into the casing (11) through the room air suction port (23) as first air.

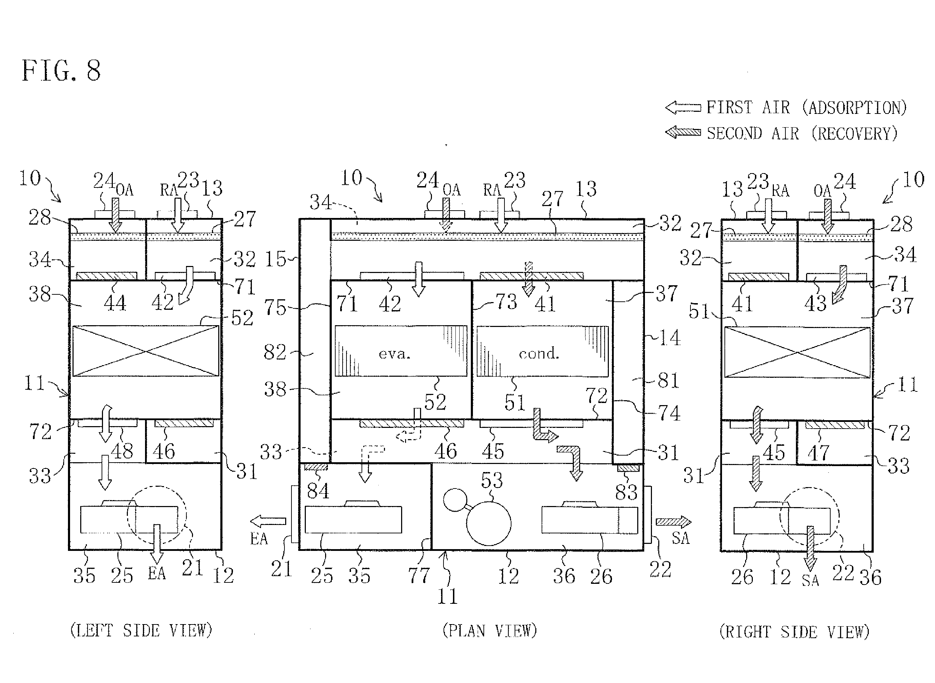

First, the first normal action of the humidification/ventilation operation will be described. As illustrated in FIGS. 8, during the first normal action, the second room air damper (42), the first outdoor air damper (43), the first air supply damper (45), and the second air discharge damper (48) are opened; and the first room air damper (41), the second outdoor air damper (44), the second air supply damper (46), and first air discharge damper (47) are closed. During the first normal action, the four-way switching valve (54) is set to the first state (state illustrated in FIG. 5(A)) in the refrigerant circuit (50). The first adsorption heat exchanger (51) serves as the condenser, and the second adsorption heat exchanger (52) serves as the evaporator.

The first air flows into the room air path (32) to pass through the room air filter (27), and then flows into the second heat exchange chamber (38) through the second room air damper (42). Subsequently, the first air passes through the second adsorption heat exchanger (52). In the second adsorption heat exchanger (52), moisture in the first air adsorbs to the adsorbent, and then adsorption heat generated thereupon is absorbed by refrigerant. The first air from which moisture is removed in the second adsorption heat exchanger (52) flows into the air discharge path (33) through the second air discharge damper (48). After the first air passes through the air discharge fan chamber (35), the first air is discharged to the outside through the air discharge port (21).

On the other hand, the second air flows into the outdoor air path (34) to pass through the outdoor air filter (28), and then flows into the first heat exchange chamber (37) through the first outdoor air damper (43). Subsequently, the second air passes through the first adsorption heat exchanger (51). In the first adsorption heat exchanger (51), moisture desorbs from the adsorbent heated by refrigerant, and then the desorbed moisture is imparted to the second air. The second air humidified in the first adsorption heat exchanger (51) flows into the air supply path (31) through the first air supply damper (45). After the second air passes through the air supply fan chamber (36), the second air is supplied to the room through the air supply port (22).

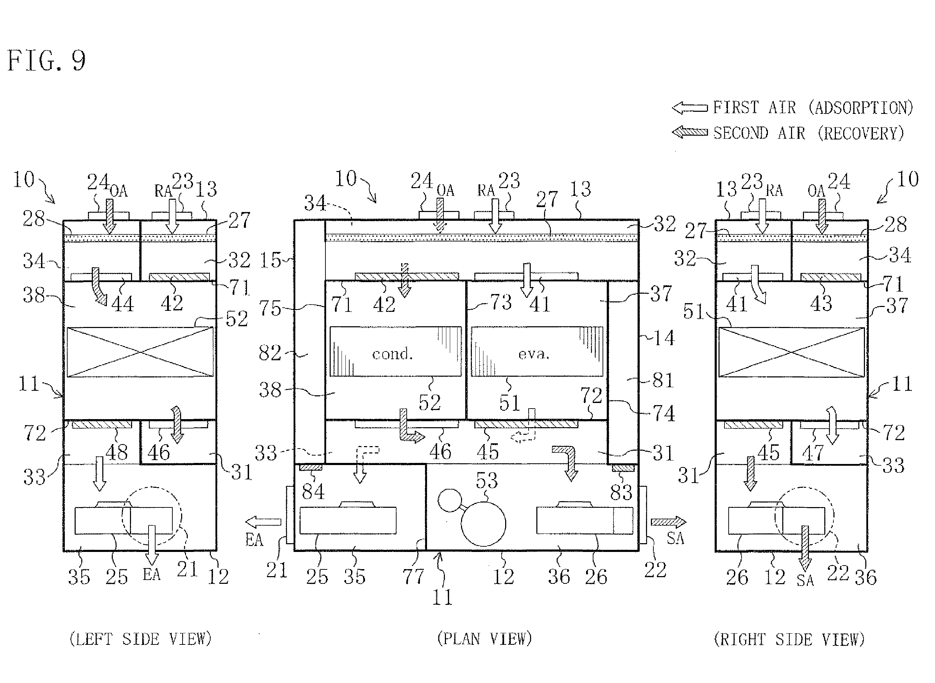

Next, the second normal action of the humidification/ventilation operation will be described. As illustrated in FIGS. 9, during the second normal action, the first room air damper (41), the second outdoor air damper (44), the second air supply damper (46), and the first air discharge damper (47) are opened; and the second room air damper (42), the first outdoor air damper (43), the first air supply damper (45), and the second air discharge damper (48) are closed. During the second normal action, the four-way switching valve (54) is set to the second state (state illustrated in FIG. 5(B)) in the refrigerant circuit (50). The first adsorption heat exchanger (51) serves as the evaporator, and the second adsorption heat exchanger (52) serves as the condenser.

The first air flows into the room air path (32) to pass through the room air filter (27), and then flows into the first heat exchange chamber (37) through the first room air damper (41). Subsequently, the first air passes through the first adsorption heat exchanger (51). In the first adsorption heat exchanger (51), moisture in the first air adsorbs to the adsorbent, and then adsorption heat generated thereupon is absorbed by refrigerant. The first air from which moisture is removed in the first adsorption heat exchanger (51) flows into the air discharge path (33) through the first air discharge damper (47). After the first air passes through the air discharge fan chamber (35), the first air is discharged to the outside through the air discharge port (21).

On the other hand, the second air flows into the outdoor air path (34) to pass through the outdoor air filter (28), and then flows into the second heat exchange chamber (38) through the second outdoor air damper (44). Subsequently, the second air passes through the second adsorption heat exchanger (52). In the second adsorption heat exchanger (52), moisture desorbs from the adsorbent heated by refrigerant, and then the desorbed moisture is imparted to the second air. The second air humidified in the second adsorption heat exchanger (52) flows into the air supply path (31) through the second air supply damper (46). After the second air passes through the air supply fan chamber (36), the second air is supplied to the room through the air supply port (22).

### <Simple Ventilation Operation>

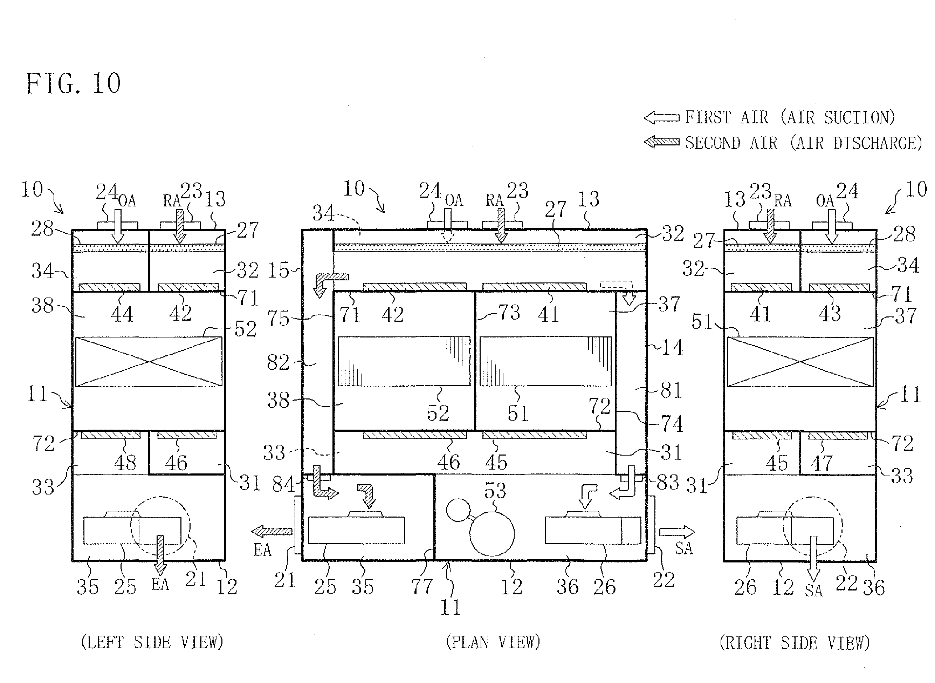

During the simple ventilation operation, the humidity control apparatus (10) supplies taken outdoor air (OA) to the room as supply air (SA) in unchanged form, and, at the same time, discharges taken room air (RA) to the outside as exhaust air (EA) in unchanged form. An action of the humidity control apparatus (10) in the simple ventilation operation will be described with reference to FIGS. 10.

During the simple ventilation operation, in the humidity control apparatus (10), the first bypass damper (83) and the second bypass damper (84) are opened; and the first room air damper (41), the second room air damper (42), the first outdoor air damper (43), the second outdoor air damper (44), the first air supply damper (45), the second air supply damper (46), the first air discharge damper (47), and the second air discharge damper (48) are closed. Further, in the simple ventilation operation, the compressor (53) of the refrigerant circuit (50) is stopped.

During the simple ventilation operation, in the humidity control apparatus (10), outdoor air is taken into the casing (11) through the outdoor air suction port (24). The outdoor air flows into the outdoor air path (34) through the outdoor air suction port (24), and then flows from the first bypass path (81) into the air supply fan chamber (36) through the first bypass damper (83). Subsequently, the outdoor air is supplied to the room through the air supply port (22).

Further, during the simple ventilation operation, in the humidity control apparatus (10), room air is taken into the casing (11) through the room air suction port (23). The room air flows into the room air path (32) through the room air suction port (23), and then flows from the second bypass path (82) into the air discharge fan chamber (35) through the second bypass damper (84). Subsequently, the room air is discharged to the outside through the air discharge port (21).

### <Purge Operation>

During the purge operation, each of first and second purge actions which will be described later is performed in the humidity control apparatus (10). A purge operation time tp which is a duration time of the first or second purge action is set to a value longer than a duration time of the first or second normal action (3-4 minutes in the present embodiment).

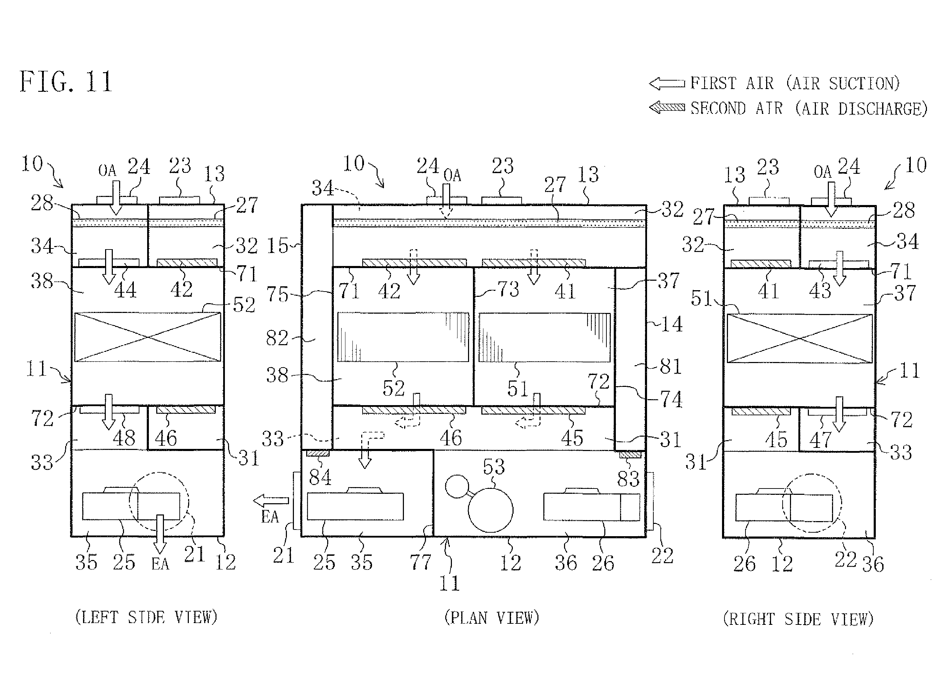

As illustrated in FIGS. 11, during the purge operation, in the humidity control apparatus (10), the first outdoor air damper (43), the second outdoor air damper (44), the first air discharge damper (47), and the second air discharge damper (48) are opened; and the first room air damper (41), the second room air damper (42), the first air supply damper (45), the second air supply damper (46), the first bypass damper (83), and the second bypass damper (84) are closed. During the purge operation, in the humidity control apparatus (10), only the air discharge fan (25) is operated, and the air supply fan (26) is stopped.

During the purge operation, a part of outdoor air flowing into the outdoor air path (34) flows into the first heat exchange chamber (37) through the first outdoor air damper (43), and the remaining air flows into the second heat exchange chamber (38) through the second outdoor air damper (44). After the air flowing into the first heat exchange chamber (37) passes through the first adsorption heat exchanger (51), such air flows into the air discharge path (33) through the first air discharge damper (47). After the air flowing into the second heat exchange chamber (38) passes through the second adsorption heat exchanger (52), such air flows into the air discharge path (33) through the second air discharge damper (48). Subsequently, the air flowing into the air discharge path (33) flows into the air discharge fan chamber (35), and then is discharged to the outside through the air discharge port (21).

First, the first purge action will be described. During the first purge action, the four-way switching valve (54) is set to the first state (state illustrated in FIG. 5(A)) in the refrigerant circuit (50). The first adsorption heat exchanger (51) serves as the condenser, and the second adsorption heat exchanger (52) serves as the evaporator. In the first adsorption heat exchanger (51), refrigerant releases heat to outdoor air to be condensed. In the second adsorption heat exchanger (52), moisture in outdoor air adsorbs to the adsorbent, and then refrigerant absorbs adsorption heat generated thereupon to be evaporated.

In the first purge action, the capacity of the compressor (53) is controlled so that the refrigerant evaporation temperature in the second adsorption heat exchanger (52) is equal to the outdoor air dew-point temperature; and the degree of opening of the electric-operated expansion valve (55) is controlled so that the degree of superheat of refrigerant flowing out from the second adsorption heat exchanger (52) reaches a predetermined target value. The controller (60) controls the capacity of the compressor (53) and the degree of opening of the electric-operated expansion valve (55). The control operation of the controller (60) will be described in detail later.

In this manner, moisture in air adsorbs to the second adsorption heat exchanger (52) during the first purge action. Immediately before the first purge action is completed, the moisture content (i.e., a ratio of the amount of moisture adsorbed to the adsorption heat exchanger, to the amount of moisture which is adsorbable to the adsorption heat exchanger) of the second adsorption heat exchanger (52) becomes equal to or greater than 90%. In the dehumidification/ventilation operation or the humidification/ventilation operation, the moisture content of the second adsorption heat exchanger (52) immediately before the first normal action is completed is approximately 70%. Thus, the moisture content of the second adsorption heat exchanger (52) immediately before the completion of the first purge action is greater than that immediately before the completion of the first normal action.

The humidity control apparatus (10) is for controlling the air humidity, and therefore adsorbent having higher water (H₂O) adsorption capacity is used in the humidity control apparatus (10). In addition, the amount of water vapor in air is much greater than that of odor material, and therefore the partial pressure of water vapor in air is much higher than that of odor material. Thus, water has higher adsorbability to the adsorbent of the adsorption heat exchanger (51, 52) as compared to that of odor material.

This allows water vapor having the higher adsorbability to the adsorbent to preferentially adsorb to the adsorbent when the moisture content of the second adsorption heat exchanger (52) is increased by the first purge action, thereby desorbing odor material such as ammonia, which generally adsorbs to the adsorbent, from the adsorbent. The odor material desorbed from the second adsorption heat exchanger (52) is discharged to the outside together with outdoor air passing through the second adsorption heat exchanger (52).

Next, the second purge action will be described. During the second purge action, the four-way switching valve (54) is set to the second state (state illustrated in FIG. 5(B)) in the refrigerant circuit (50). The second adsorption heat exchanger (52) serves as the condenser, and the first adsorption heat exchanger (51) serves as the evaporator. In the second adsorption heat exchanger (52), refrigerant releases heat to outdoor air to be condensed. In the first adsorption heat exchanger (51), moisture in outdoor air adsorbs to the adsorbent, and then refrigerant absorbs adsorption heat generated thereupon to be evaporated.

In the second purge action, the capacity of the compressor (53) is controlled so that the refrigerant evaporation temperature in the first adsorption heat exchanger (51) is equal to the outdoor air dew-point temperature; and the degree of opening of the electric-operated expansion valve (55) is controlled so that the degree of superheat of refrigerant flowing out from the first adsorption heat exchanger (51) reaches a predetermined target value. The controller (60) controls the capacity of the compressor (53) and the degree of opening of the electric-operated expansion valve (55). The control operation of the controller (60) will be described in detail later.

In this manner, moisture in air adsorbs to the first adsorption heat exchanger (51) during the second purge action. Immediately before the second purge action is completed, the moisture content of the first adsorption heat exchanger (51) becomes equal to or greater than 90%. In the dehumidification/ventilation operation or the humidification/ventilation operation, the moisture content of the first adsorption heat exchanger (51) immediately before the second normal action is completed is approximately 70%. Thus, the moisture content of the first adsorption heat exchanger (51) immediately before the completion of the second purge action is greater than that immediately before the completion of the first normal action.

As described above, water has the higher adsorbability to the adsorbent of the adsorption heat exchanger (51, 52) as compared to that of odor material. This allows water vapor having the higher adsorbability to the adsorbent to preferentially adsorb to the adsorbent when the moisture content of the first adsorption heat exchanger (51) is increased by the second purge action, thereby desorbing odor material such as ammonia, which generally adsorbs to the adsorbent, from the adsorbent. The odor material desorbed from the first adsorption heat exchanger (51) is discharged to the outside together with outdoor air passing through the first adsorption heat exchanger (51).

During the purge operation, in the humidity control apparatus (10), the air supply fan (26) is stopped, thereby, as a general rule, not circulating air in the air supply fan chamber (36) (see FIGS. 11). On the other hand, the compressor (53) is operated in the refrigerant circuit (50) during the purge operation. The inverter section of the power-source substrate (92) generates heat, and therefore it is necessary to release the heat generated in the inverter section, through the heat-release fins (93). When the ambient temperature of the humidity control apparatus (10) is not so high, the heat-release amount from the heat-release fins (93) is sufficiently ensured even in stagnant air inside the air supply fan chamber (36). However, when the ambient temperature of the humidity control apparatus (10) rises to some extent, the heat-release amount from the heat-release fins (93) cannot be ensured, thereby causing damage in the inverter section.

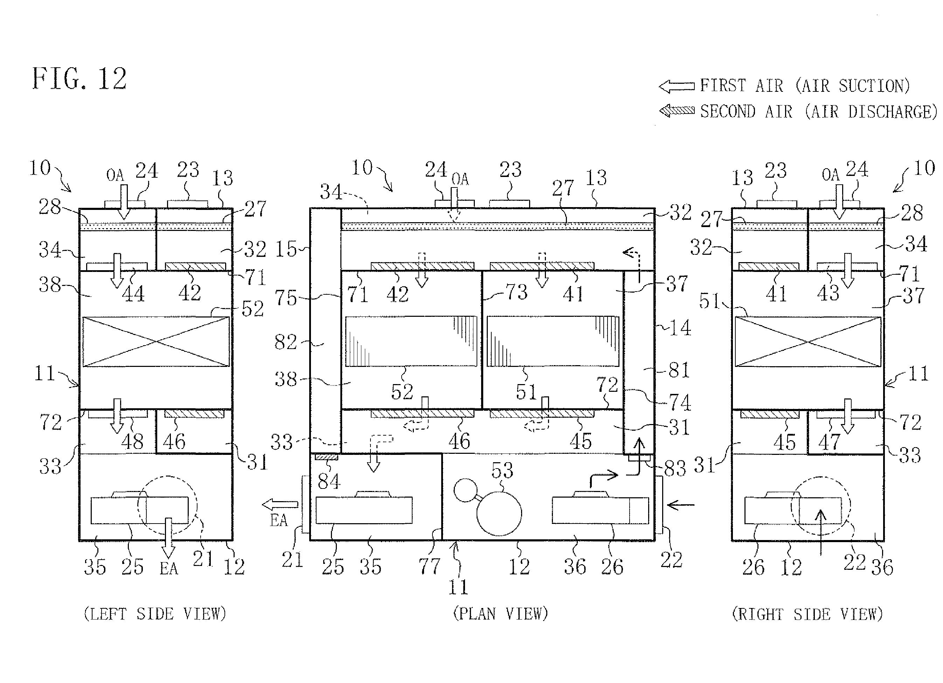

The humidity control apparatus (10) of the present embodiment performs an action for enhancing the heat release from the heat-release fins (93) when it is about to cause insufficiency of the heat-release amount from the heat-release fins (93) during the purge operation. Such an action will be described hereinafter with reference to FIGS. 12.

The humidity control apparatus (10) of the present embodiment is typically installed in a space above a ceiling, and environment in such a space is rather close to outdoor environment. When the outdoor air temperature detected by the outdoor air temperature sensor exceeds a predetermined reference value (e.g., 11°C) during the purge operation, the humidity control apparatus (10) determines that there is a possibility to cause the insufficiency of the heat-release amount from the heat-release fins (93), and then opens the first bypass damper (83). During the purge operation, the pressure of the outdoor air path (34) positioned on a suction side of the air discharge fan (25) is negative. This allows outdoor air to flow into the air supply fan chamber (36) through the air supply port (22) and the air supply fan (26) which is stopped, when opening the first bypass damper (83). Subsequently, the outdoor air passes through the first bypass damper (83), and then flows into the outdoor air path (34) through the first bypass path (81). In this manner, when opening the first bypass damper (83) during the purge operation, air flows in the air supply fan chamber (36), thereby enhancing the heat release from the heat-release fins (93).

### Control Operation of Controller

The control operation performed by the controller (60) will be described. The control operation during the purge operation will be mainly described hereinafter.

The controller (60) sums up the operation time of the dehumidification/ventilation operation and of the humidification/ventilation operation (i.e., normal operations), and permits the humidity control apparatus (10) to execute the purge operation when the summation of the operation time reaches a predetermined reference value. Specifically, the controller (60) permits the humidity control apparatus (10) to execute the purge operation when the summation of the operation time of the normal operations exceeds 12 hours, and a switch of a remote controller of the humidity control apparatus (10) is "OFF." The humidity control apparatus (10) may be constantly operated, and the switch of the remote controller may not be "OFF." In such a case, the controller (60) forcibly permits the humidity control apparatus (10) to execute the purge operation when the summation of the operation time of the normal operations exceeds 120 hours.

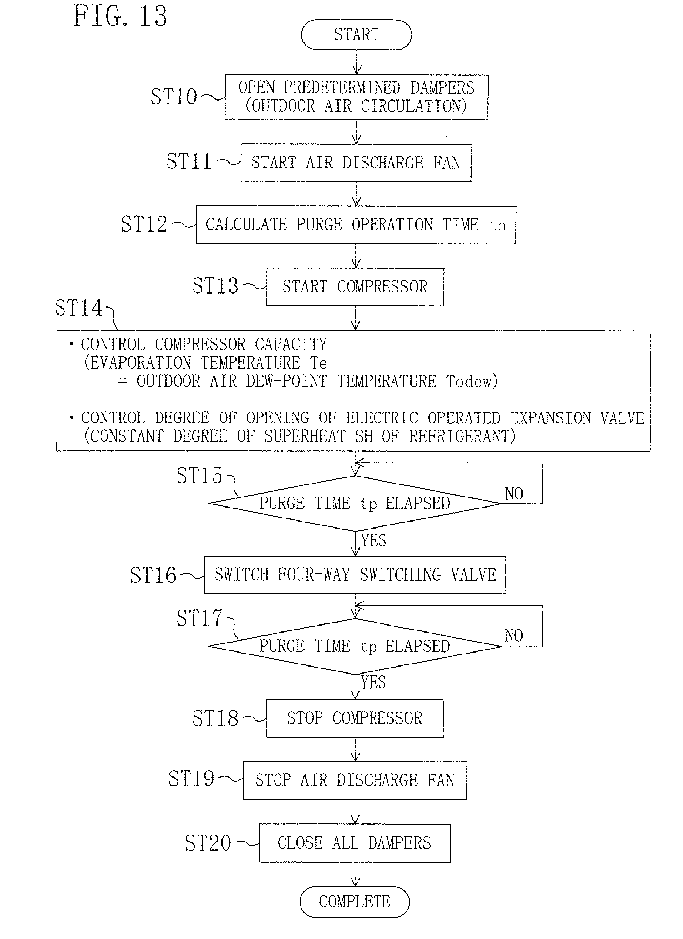

The control operation performed by the controller (60) during the purge operation will be described with reference to the flow chart of FIG. 13.

At step ST10, when satisfying conditions for executing the purge operation, the controller (60) opens the first outdoor air damper (43), the second outdoor air damper (44), the first air discharge damper (47), and the second air discharge damper (48), and closes the remaining dampers. Subsequently, at step ST11, the controller (60) starts the air discharge fan (25). At this point, the air supply fan (26) is stopped.

At step ST12, the controller (60) sets the purge operation time tp which is the duration time of the first or second purge action. At this point, the controller (60) controls the purge operation time tp depending on the outdoor air absolute humidity. Specifically, the controller (60) calculates the outdoor air absolute humidity by using the outdoor air temperature measured by the outdoor air temperature sensor, and the outdoor air relative humidity measured by the outdoor air humidity sensor (97). The controller (60) sets the value of the purge operation time tp within a range of greater than or equal to 10 minutes and less than or equal to 50 minutes so that the purge operation time tp becomes longer as the outdoor air absolute humidity decreases.

Then, at step ST13, the controller (60) starts the compressor (53). At this point, suppose that the four-way switching valve (54) is in the first state (state illustrated in FIG. 5(A)) at the time of starting the compressor (53). In such a case, the first purge action is executed when the compressor (53) is started. Subsequently, at step ST14, the controller (60) controls the capacity of the compressor (53) and the degree of opening of the electric-operated expansion valve (55). The controller (60) continuously controls the capacity of the compressor (53) and the degree of opening of the electric-operated expansion valve (55) until the process reaches step ST18 which will be described later.

Specifically, at step ST 14, the controller (60) controls the operating frequency of the compressor (53) so that the refrigerant evaporation temperature Te in the second adsorption heat exchanger (52) serving as the evaporator is equal to the outdoor air dew-point temperature Todew. At this point, the controller (60) calculates the evaporation temperature Te by using the measured value of the low-pressure sensor (102), and calculates the outdoor air dew-point temperature by using the measured values of the outdoor air temperature sensor and of the outdoor air humidity sensor (97). The controller (60) increases the operating frequency of the compressor (53) if the evaporation temperature Te is higher than the dew-point temperature Todew; and decreases the operating frequency of the compressor (53) if the evaporation temperature Te is lower than the dew-point temperature Todew.

In addition, at step ST 14, the controller (60) controls the degree of opening of the electric-operated expansion valve (55) so that the degree of superheat of refrigerant flowing out from the second adsorption heat exchanger (52) which serves as the evaporator reaches the predetermined target value (e.g., 3°C). At this point, the controller (60) calculates the degree of superheat SH of refrigerant by using the sucked refrigerant pressure of the compressor (53), which is measured by the low-pressure sensor (102), and the sucked refrigeration temperature of the compressor (53), which is measured by the suction pipe temperature sensor (104). The controller (60) increases the degree of opening of the electric-operated expansion valve (55) if the calculated degree of superheat SH of refrigerant is higher than the target value; and decreases the degree of opening of the electric-operated expansion valve (55) if the calculated degree of superheat SH of refrigerant is lower than the target value.

Subsequently, at step ST 15, the controller (60) compares between the duration time of the first purge action (i.e., time elapsed after the compressor (53) is started at step ST 13) and the purge operation time tp which is set at step ST 12. If the duration time of the first purge action does not reach the purge operation time tp, the controller (60) remains in a standby state and continues the first purge action. On the other hand, if the duration time of the first purge action reaches the purge operation time tp, the controller (60) proceeds to step ST 16, and switches the four-way switching valve (54) from the first state to the second state (state illustrated in FIG. 5(B)). That is, the controller (60) completes the first purge action, and starts the second purge action.

As described above, even after the start of the second purge action, the controller (60) continuously controls the compressor (53) and the electric-operated expansion valve (55). That is, the controller (60) controls the operating frequency of the compressor (53) so that the refrigerant evaporation temperature Te in the first adsorption heat exchanger (51) which serves as the evaporator is equal to the outdoor air dew-point temperature Todew. In addition, the controller (60) controls the degree of opening of the electric-operated expansion valve (55) so that the degree of superheat of refrigerant flowing out from the first adsorption heat exchanger (51) which serves as the evaporator reaches the predetermined target value.

Subsequently, at step ST 17, the controller (60) compares between the duration time of the second purge action (i.e., time elapsed after the four-way switching valve (54) is switched at step ST 16) and the purge operation time tp which is set at step ST 12. If the duration time of the second purge action does not reach the purge operation time tp, the controller (60) remains in a standby state and continues the second purge action. On the other hand, if the duration time of the second purge action reaches the purge operation time tp, the controller (60) proceeds to step ST 18 to stop the compressor (53).

Next, at step ST 19, the controller (60) stops the air discharge fan (25). Further, at step ST 20, the controller (60) closes the first outdoor air damper (43), the second outdoor air damper (44), the first air discharge damper (47), and the second air discharge damper (48) (i.e., dampers opened at step ST 10).

Then, the controller (60) completes the purge operation. At this point, in the controller (60), the operation time of the dehumidification/ventilation operation and the humidification/ventilation operation, which has been summed up to that point, is reset to zero.

In addition, the controller (60) performs the purge operation as a test operation immediately after the humidity control apparatus (10) is installed. Environment where the humidity control apparatus (10) is stored before its installation is various, and it is conceivable that odor material may enter the casing (11) of the humidity control apparatus (10) during storage, and such odor material may adsorb to the adsorption heat exchangers (51, 52). Thus, the purge operation performed by the humidity control apparatus (10) immediately after the installation of the humidity control apparatus (10) ensures a state in which odor material is not adsorbed to the adsorption heat exchangers (51, 52), thereby preventing the odor material from entering the room during the subsequent dehumidification/ventilation operation or humidification/ventilation operation.

### Advantages of Embodiment

According to the present embodiment, the humidity control apparatus (10) performs the purge operation to increase the moisture content of the adsorption heat exchanger (51, 52), thereby desorbing odor material from the adsorption heat exchanger (51, 52). The amount of odor material adsorbed to the adsorption heat exchanger (51, 52) can be reduced by the operation of the humidity control apparatus (10) itself without a maintenance person going and working at an installation site of the humidity control apparatus (10). This prevents odor material desorbed from the adsorption heat exchangers (51, 52) from being supplied to the room together with humidity-controlled air during the normal operations, thereby ensuring improvement of comfort in the room.

During the purge operation of the present embodiment, the moisture content of the adsorption heat exchanger (51, 52) reaches the value equal to or greater than the moisture content of the adsorption heat exchanger (51, 52) during the normal operation. That is, during the normal operation subsequent to the purge operation, the moisture content of the adsorption heat exchanger (51, 52) does not exceed the value during the purge operation. This ensures reduction of desorption of odor material from the adsorption heat exchangers (51, 52) during the dehumidification/ventilation operation or the humidification/ventilation operation, thereby, also in this regard, ensuring the comfort in the room.

In the present embodiment, the capacity of the compressor (53) of the refrigerant circuit (50) is controlled so that the refrigerant evaporation temperature in the adsorption heat exchanger (51, 52) operating as the evaporator during the purge operation is equal to the dew-point temperature of air passing through such an adsorption heat exchanger (51, 52). This reduces the surface temperature of the adsorption heat exchanger (51, 52) as much as possible within a range in which dew condensation is not caused on the surface of the adsorption heat exchanger (51, 52) serving as the evaporator, during the purge operation. Consequently, it is unnecessary to dispose drain water due to the dew condensation on the adsorption heat exchanger (51, 52), and the amount of moisture adsorbed to the adsorption heat exchanger (51, 52) during the purge operation can be maximized.

In the present embodiment, during the purge operation, the humidity control apparatus (10) supplies outdoor air to the first adsorption heat exchanger (51) and the second adsorption heat exchanger (52), and discharges the outdoor air passing through the adsorption heat exchangers (51, 52) to the outside. That is, the humidity control apparatus (10) performs the purge operation without sucking air from the room, and blowing off air to the room. Thus, according to the present embodiment, the purge operation can be performed without effects on the room environment.

In the present embodiment, the time for which moisture in air adsorbs to the adsorption heat exchanger (51, 52) during the purge operation (i.e., purge operation time tp) is longer than the time for which moisture in air adsorbs to the adsorption heat exchanger (51, 52) during the normal operation. Thus, according to the present embodiment, this ensures the moisture content of the adsorption heat exchanger (51, 52) during the purge operation, which is greater than the moisture content of the adsorption heat exchanger (51, 52) during the normal operation, thereby ensuring removal of odor material from the adsorption heat exchanger (51, 52) by the purge operation.

In the present embodiment, the purge operation time tp is controlled depending on the absolute humidity of outdoor air from which moisture is imparted to the adsorption heat exchanger (51, 52) during the purge operation. This ensures an increase in the moisture content of the adsorption heat exchanger (51, 52) in spite of the outdoor-air state during the purge operation, thereby ensuring the removal of odor material from the adsorption heat exchanger (51, 52).

### First Variation of Embodiment

In a refrigerant circuit (50) of the present embodiment, a supercritical cycle may be performed, in which a high pressure of a refrigeration cycle is set to a value higher than a critical pressure of refrigerant. In such a case, one of a first adsorption heat exchanger (51) and a second adsorption heat exchanger (52) operates as a gas cooler, and the other operates as an evaporator.

### Second Variation of Embodiment

In a humidity control apparatus (10) of the present embodiment, adsorbent deposited on a first adsorption heat exchanger (51) and a second adsorption heat exchanger (52) is heated or cooled by refrigerant, but the adsorbent may be heated or cooled by supplying cold or hot water to the first adsorption heat exchanger (51) and the second adsorption heat exchanger (52).

The foregoing embodiments have been set forth merely for purposes of preferred examples in nature, and are not intended to limit the scope, applications, and use of the invention.

### INDUSTRIAL APPLICABILITY

As described above, the present invention is useful in a humidity control apparatus for controlling air humidity by using adsorbent.

## Claims

1. A humidity control apparatus including adsorption members (51, 52) with adsorbent, and controlling air humidity by exposing taken air to the adsorbent of the adsorption members (51, 52), wherein
operations are selectively executed, which are normal operations in which air, humidity of which is controlled when passing through the adsorption member (51, 52), is supplied to a room; and a purge operation in which, in order to desorb odor material from the adsorption member (51, 52), moisture in taken air adsorbs to the adsorption member (51, 52) to obtain a moisture content of the adsorption member (51, 52) equal to or greater than a maximum value of a moisture content of the adsorption member (51, 52) during the normal operation.

2. The humidity control apparatus of claim 1, wherein
adsorption heat exchangers (51, 52) with adsorbent deposited on surfaces thereof are provided as the adsorption members;
the adsorption heat exchangers (51, 52) are connected to each other to form a heat-transfer medium circuit (50) in which heat-transfer medium circulates; and
the heat-transfer medium circuit (50) performs an action in which heat-transfer medium for cooling is supplied to the adsorption heat exchanger (51, 52) in order to adsorb moisture in air to the adsorption heat exchanger (51, 52), and an action in which heat-transfer medium for heating is supplied to the adsorption heat exchanger (51, 52) in order to desorb moisture from the adsorption heat exchanger (51, 52).

3. The humidity control apparatus of claim 2, wherein
a refrigerant circuit (50) performing a refrigeration cycle by circulating refrigerant is provided as the heat-transfer medium circuit; and,
during the purge operation, in the refrigerant circuit (50), refrigerant circulates so that the adsorption heat exchanger (51, 52) to which moisture in air adsorbs serves as an evaporator, and a capacity of a compressor (53) is controlled so that a refrigerant evaporation temperature in the adsorption heat exchanger (51, 52) is equal to a dew-point temperature of air passing through the adsorption heat exchanger (51, 52).

4. The humidity control apparatus of claim 3, wherein,
during the purge operation, in the refrigerant circuit (50), a degree of opening of an expansion valve (55) is controlled so that a degree of superheat of refrigerant at an outlet of the adsorption heat exchanger (51, 52) serving as the evaporator is constant.

5. The humidity control apparatus of claim 2, wherein
a refrigerant circuit (50) performing a refrigeration cycle by circulating refrigerant is provided as the heat-transfer medium circuit;
the refrigerant circuit (50) includes a first adsorption heat exchanger (51) and a second adsorption heat exchanger (52) as adsorption members, and is switchable between a state in which the first adsorption heat exchanger (51) serves as a heat radiator, and the second adsorption heat exchanger (52) serves as the evaporator; and a state in which the second adsorption heat exchanger (52) serves as the heat radiator, and the first adsorption heat exchanger (51) serves as the evaporator;
during the normal operation, actions are alternately repeated, which are a first normal action in which second air is supplied to the first adsorption heat exchanger (51) serving as the heat radiator, and first air is supplied to the second adsorption heat exchanger (52) serving as the evaporator, and a second normal action in which second air is supplied to the second adsorption heat exchanger (52) serving as the heat radiator, and first air is supplied to the first adsorption heat exchanger (51) serving as the evaporator; and one of the first dehumidified air and the second humidified air is supplied to the room, and the other is discharged to outside; and
during the purge operation, each of actions is performed, which are a first purge action in which outdoor air is supplied to the first adsorption heat exchanger (51) serving as the heat radiator, and to the second adsorption heat exchanger (52) serving as the evaporator, and a second purge action in which outdoor air is supplied to the second adsorption heat exchanger (52) serving as the heat radiator, and to the first adsorption heat exchanger (51) serving as the evaporator; and the outdoor air passing through the first adsorption heat exchanger (51) and the second adsorption heat exchanger (52) is discharged to the outside.

6. The humidity control apparatus of claim 5, wherein
the first and second normal actions are alternately performed at predetermined time intervals during the normal operation;
the first and second purge actions are performed for a predetermined period of time during the purge operation; and
a duration time of each purge action during the purge operation is longer than a duration time of each normal action during the normal operation.

7. The humidity control apparatus of claim 1, wherein
a duration time of the purge operation is controlled so as to increase as an absolute humidity of air supplied to the adsorption member (51, 52) during the purge operation becomes lower.

8. The humidity control apparatus of claim 1, wherein
the purge operation is performed every time a summation of time for which the normal operations are performed reaches a predetermined reference value.
